# EUROPEAN PATENT APPLICATION

(11) **EP 3 064 802 A1**
(43) Date of publication of application: **07.09.2016**
(21) Application number: 15157631.1
(22) Date of filing: 04.03.2015
(51) Int. Cl.: F16H 1/28, F16H 57/08, B64C 27/12, F16C 23/08, F16C 33/36, F16H 57/04, F16C 33/58, F16C 33/66

(54) **ROTOR TRANSMISSION UNIT FOR AN AIRCRAFT CAPABLE OF HOVERING**

(71) Applicant: AGUSTAWESTLAND S.p.A., 00195 Rome (IT)
(72) Inventor: Gasparini, Giuseppe, 21017 Samarate (IT); Scaltritti, Diego, 21017 Samarate (IT)
(74) Representative: Di Sciuva, Michele

(57) **Abstract**

A transmission unit (8) for a rotor (4) of an aircraft (1) capable of hovering, comprising: a sun gear (14) rotating about a first axis (A) and connectable to a drive input member (10); a fixed crown wheel (13); and at least three planet gears (15), which can rotate about respective second axes (B) and can each mesh with the sun gear (14) and the crown wheel (13); the second axes (B) being, in turn, rotatable about the first axis (A); and a spider (16) operatively connected to the planet gears (15), rotating about the first axis (A) and connectable to the drive shaft (5); the transmission unit (8) comprises at least three bearings (21), each interposed between a respective planet gear (15) and the spider (16); at least one bearing (21) comprises a number of rolling bodies (27) shaped like barrel rollers and made of a ceramic material.

## Description

The present invention relates to a transmission unit for a rotor of an aircraft capable of hovering, in particular a helicopter.

As is known, helicopters generally comprise:
- a power unit, for example a turbine;
- a main rotor; and
- a number of reduction stages interposed between the power unit and the main rotor and designed to transmit driving force from the power unit to the main rotor with a desired transmission ratio.

More specifically, the main rotor comprises a drive shaft and a number of blades hinged on the drive shaft.

The final reduction stage, i.e. the reduction stage connected directly to the drive shaft, is formed by a planetary gear train comprising:
- a fixed casing;
- a first gear, hereinafter referred to as the sun gear, which is fitted on an input shaft operatively connected to the turbine;
- a second gear, hereinafter referred to as the crown wheel, which is defined by the casing;
- a number of third gears, hereinafter referred to as planet gears, which mesh with the first and second gears; and
- a wheel, hereinafter referred to as the spider, which is operatively connected to the third gears and to the drive shaft of the main rotor.

The input and drive shafts rotate about a first common axis.

The planet gears rotate about respective second axes, which are offset with respect to the first axis and, in turn, rotate about the first axis.

In this way, in addition to rotating about their respective second axes, the planet gears describe an orbital motion round the first axis.

In order to support the planet gears on the spider such that they can rotate about the respective second axes and to allow flexure of the drive shaft about the first axis, the final reduction stage comprises a number of rolling bearings.

Each rolling bearing comprises, in a known manner:
- a radially outer race fastened to the associated planet gear;
- a radially inner race fastened to an associated pin carried by the spider; and
- a number of rolling bodies, rolling on the above-mentioned radially inner and outer races.

The bearings used in the planet gears for the above-described application employ two rows of conical steel rollers as rolling bodies.

More precisely, the conical rollers are mounted in an 'X' configuration, i.e. their respective axes are inclined to each other and incident on the second axis.

Due to the particular application inside the final reduction stage of the transmission unit, the bearings of the planet gears of the planetary gear train are subjected, in use, to particular operating conditions and must satisfy special design constraints, as listed below.

Firstly, the planetary gear train defines the final reduction stage and is therefore subjected to particularly high torque levels, which generate particularly high corresponding loads on the bearings of the planet gears.

Secondly, the drive shaft tends to flex under load. This flexure makes the operating conditions of the bearings of the planet gears even more severe when maximum torque is transmitted through the planetary gear train.

In fact, this flexure aggravates misalignments of the rolling bodies inside the bearing.

Thirdly, lubrication of the bearings of the planet gears is carried out using nozzles carried on the casing of the planetary gear train in fixed positions with respect to the first and second axes.

Since they rotate about their own second axes and are carried around the first axis by the spider, the planet gears pass by the nozzles and can therefore be lubricated with a limited frequency over time.

The above-stated design constraints and operating conditions determine the operating life of the planet gears and, consequently, of the entire transmission unit and drive shaft in the case where the flow of lubricating fluid is interrupted.

Thus, a need is felt within the industry to have a transmission unit that is capable of extending the operating life of the planet gears in the case where the supply of lubricating fluid is cut off.

EP-A-2551550, in the name of the applicant, describes an example of a final reduction stage comprising a planetary gear train capable of driving the drive shaft of the main rotor of a helicopter.

EP-A-2664809, in the name of the applicant, describes an example of a bearing for helicopter applications.

The object of the present invention is to provide a transmission unit that satisfies the above-specified needs in simple and inexpensive manner.

The above-stated object is achieved by the present invention, in so far as it relates to a transmission unit for a rotor of an aircraft capable of hovering, comprising: a sun gear rotating about a first axis and connectable to a drive input member; a fixed crown wheel; and at least three planet gears, which rotate about respective second axes and each mesh with said sun gear and said crown wheel; said second axes, in turn, rotating about said first axis; and a spider operatively connected to said planet gears, rotating about said first axis and connectable to said drive shaft; said transmission unit comprising at least three bearings, each interposed between a respective said planet gear and said spider; characterized in that at least one said bearing comprises a number of rolling bodies shaped like barrel rollers and made of a ceramic material.

In greater detail, said at least one bearing comprises a single row of said rolling bodies, which extends around the respective said second axis.

In use, said rolling bodies roll around respective third axes parallel to said second axis.

In particular, said bearing comprises a first race and a second race arranged radially within said first race, said rolling body being radially interposed between said first and second races.

Said first race is integrally defined by a respective said planet gear and said second race is defined by a ring fitted on said spider.

Furthermore, said ring comprises at least one pair of holes, oblique with respect to said first axis and designed to allow the supply of a lubricating fluid inside said bearing.

In one particular embodiment, said sun gear, crown wheel and planet gears comprise respective first straight teeth, second straight teeth and third straight teeth; at least one said planet gear comprising more than two of said third teeth simultaneously meshing with respective said first teeth of said sun gear; and/or at least one said planet gear comprising more than two of said third teeth simultaneously meshing with respective said second teeth of said second sun gear.

In greater detail, said rolling body comprises a surface that, in use, rolls on said first race; said surface and said first race being curved and having respective curvatures that are different from each other.

Said surface and said second race are curved and have respective curvatures that are different from each other.

Said bearing further comprises at least one first clearance, which extends radially with respect to said second axis and is defined between said rolling body and one of said first and second races.

Said second race comprises a pair of shoulders; said rolling body is interposed between said shoulders and is separated from said shoulders by a second clearance in the axial direction.

Said bearing further comprises a containment cage for said rolling bodies, which is radially interposed between said first and second races; said rolling body is separated from said cage by a third clearance, which extends in a direction parallel to said second axis.

In particular, it is characterized in that said ceramic material comprises silicon nitride.

For a better understanding of the present invention, a preferred embodiment is described below, purely by way of non-limitative example and with reference to the accompanying drawings, in which:
- Figure 1 is a perspective view of a helicopter comprising a planetary gear train made according to a first embodiment of the present invention;
- Figure 2 is a perspective view, on a markedly enlarged scale, of the planetary gear train made according to the present invention;
- Figure 3 is a perspective view, on a markedly enlarged scale, of the planetary gear train in Figure 2;

- Figure 4 is an axial section of the planetary gear train in Figures 2 and 3, with parts removed for clarity;
- Figures 5 and 6 are front views of the planetary gear train in Figures 2 to 4, with parts removed for clarity; and
- Figure 7 is an axial section, on a markedly enlarged scale, of a planet gear of the planetary gear train in Figures 2 to 6.

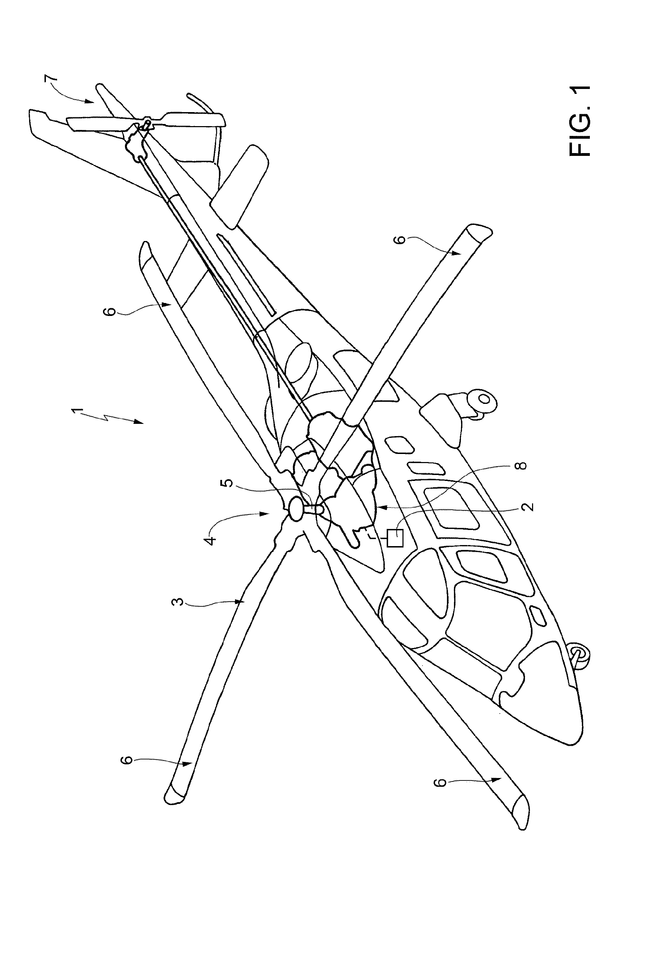

With reference to Figure 1, reference numeral 1 indicates a hover-capable aircraft, a helicopter 1 in the case shown.

The helicopter 1 comprises:
- a pair of turbines 2;
- a main rotor 4, in turn comprising a drive shaft 5 and a number of blades 6 hinged on the drive shaft 5; and
- a tail rotor 7.

The helicopter 1 further comprises a transmission unit 8 designed to transmit driving force from the turbines 2 to the drive shaft 5.

In turn, the transmission unit 8 comprises a number of reduction stages, which are arranged together in series and are interposed between the turbines 2 and the drive shaft 5.

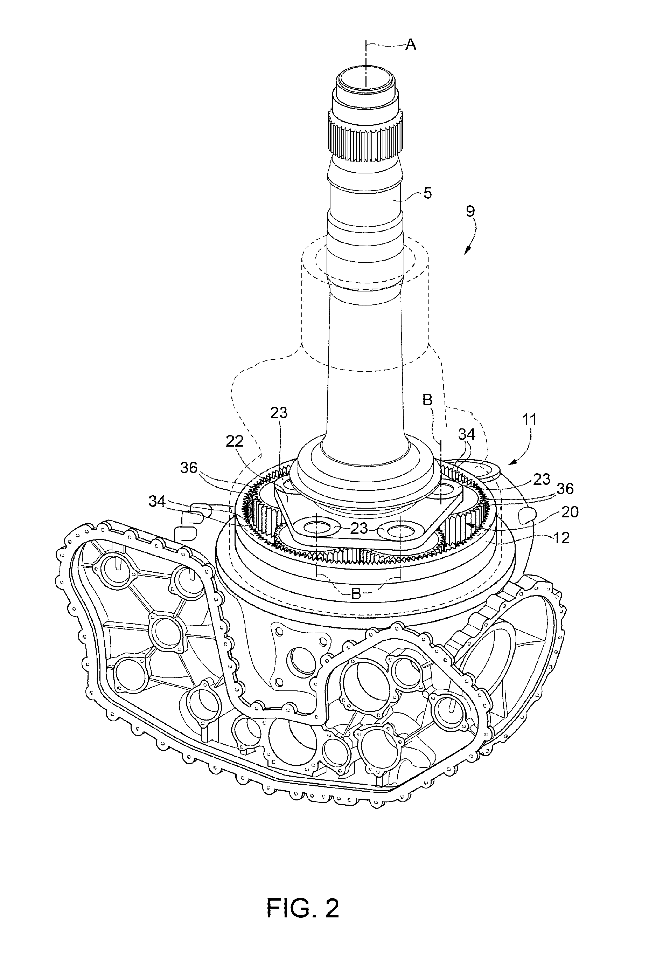

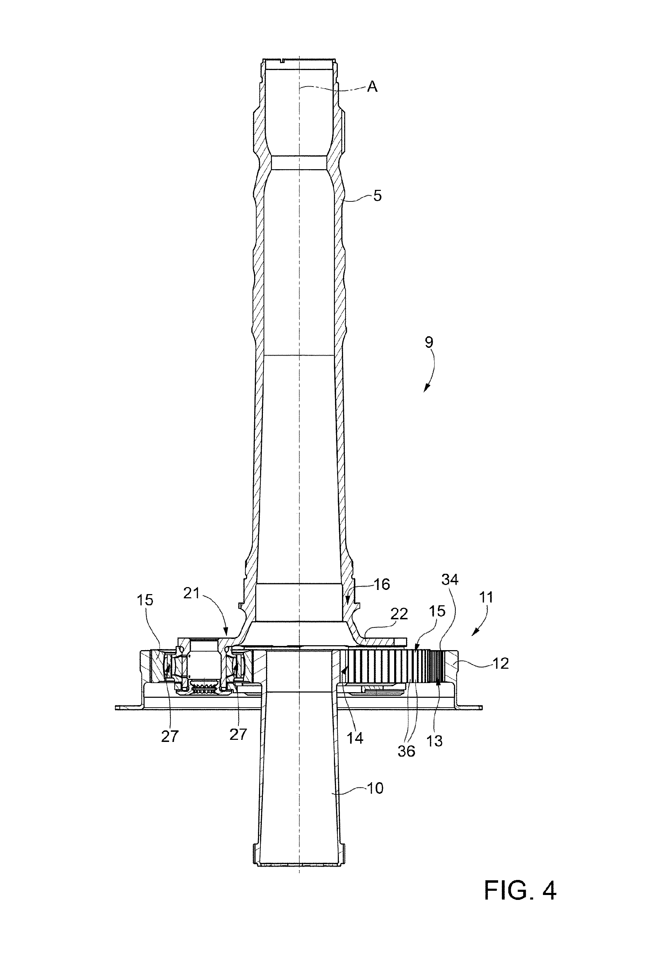

A final reduction stage 9, i.e. the stage 9 that directly transmits driving force to the output shaft 5, is shown in Figures 2 to 7.

With reference to Figures 2 to 7, the final reduction stage 9 comprises:
- an input shaft 10 rotating about an axis A;
- the drive shaft 5, which also rotates about axis A; and
- a planetary gear train 11, which is functionally interposed between the drive shaft 5 and the input shaft 10.

In turn, the planetary gear train 11 comprises:
- a casing 12, which is fixed with respect to axis A and defines gear teeth, hereinafter referred to as the crown wheel 13, arranged radially internal with respect to axis A and extending around axis A;
- a gear, hereinafter referred to as the sun gear 14, rotating about axis A, integrally with the input shaft 10;
- a number of gears, hereinafter referred to as the planet gears 15, rotating about respective axes B and simultaneously engaging with the sun gear 14 and the crown wheel 13; and
- a wheel, hereinafter referred to as the spider 16, rotating about axis A and operatively connected to the planet gears 15 and the drive shaft 5.

The axes B of the planet gears 15 rotate about axis A, integrally with the spider 16.

In other words, while the planet gears 15 rotate about their associated axes B, they describe an orbital motion around axis A.

In the embodiment shown, the spider 16 is made one piece with the drive shaft 5.

In the case shown, the axes B are parallel to each other and parallel to axis A.

In the case shown, there are five planet gears 15.

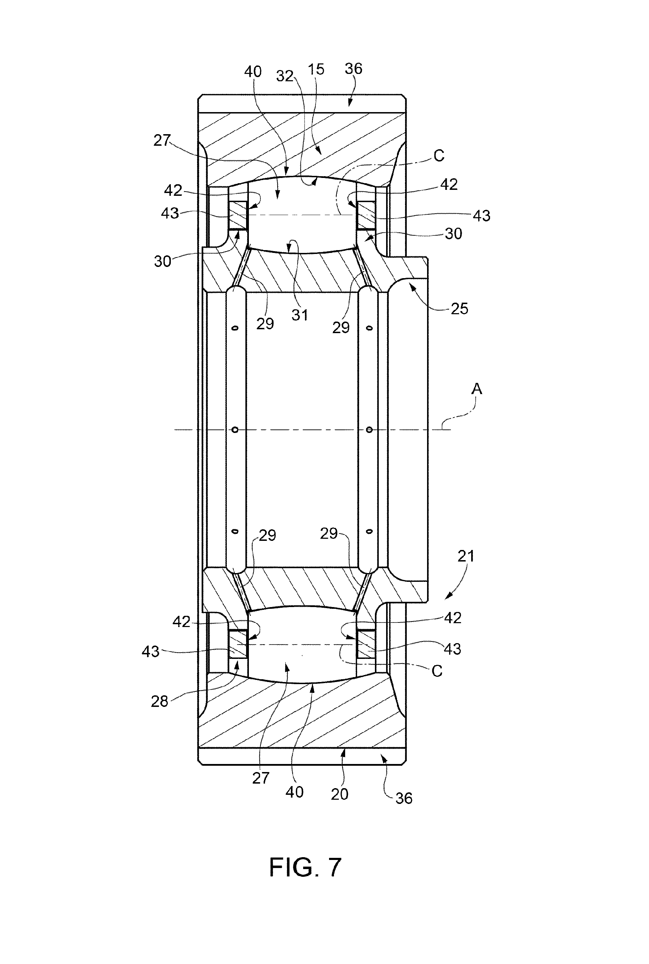

In greater detail, each planet gear 15 comprises (Figure 7):
- gear teeth 20, which are arranged in a radially external position to axis B; and
- a surface 32, which is arranged in a radially internal position to the gear teeth 20 and axis B.

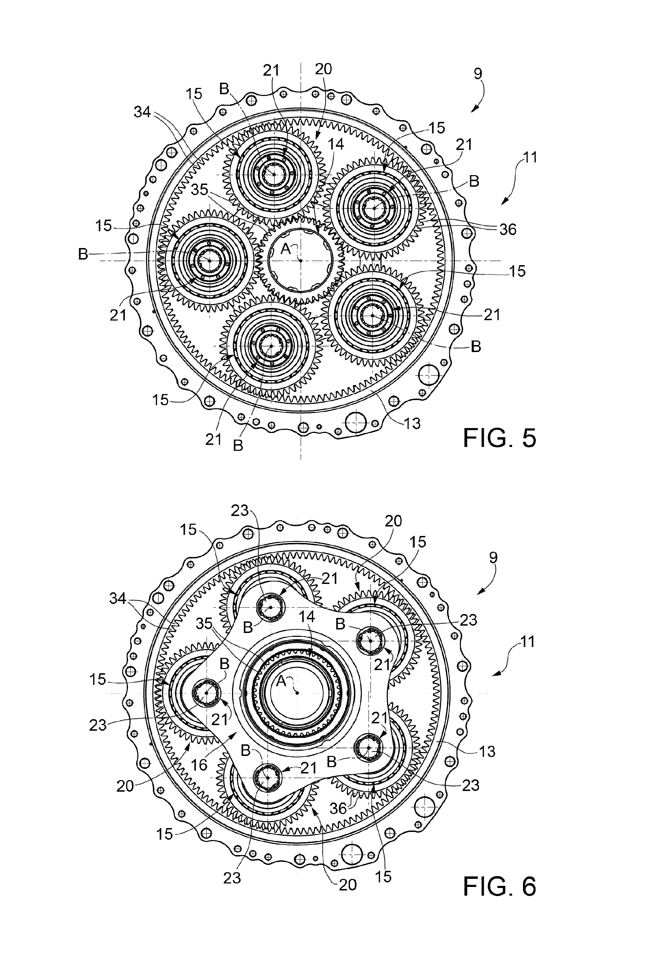

The spider 16 comprises (Figures 2 and 6):
- a body 22 lying on a plane orthogonal to axis B; and
- a number of pins 23, five in the case shown, protruding from the body 22 towards the input shaft 10, along respective axes B.

The transmission unit 8 comprises at least three bearings 21, each interposed between a respective planet gear 15 and the spider 16, so as to allow, in use, oscillation of the spider 16 with respect to the planet gears 15 about axis A and the relative rotation of the spider 16 with respect to the planet gears 15.

Advantageously, the bearings 21 comprise a number of rolling bodies 27 shaped like barrel rollers and made of a ceramic material.

Since all the bearings 21 and the planet gears 15 are the same, a single bearing 21 and the associated planet gear 15 will now be described.

In greater detail, the bearing 21 (Figure 7) comprises:
- a ring 25 arranged radially internal with respect to axis B and fastened to the associated pin 23;
- rolling bodies 27 radially interposed between the ring 25 and surface 32 and rolling on surface 31 of the ring 25 and on surface 32; and
- a containment cage 28 for the rolling bodies 27.

In greater detail, the bearing 21 comprises a single crown of rolling bodies 27.

On the opposite side to axis B, the ring 25 comprises:
- a pair of shoulders 30, spaced apart from and parallel to axis B and projecting radially to axis B;
   and
- the concave surface 31, axially interposed between the shoulders 30 and on which the rolling bodies 27 roll.

Preferably, the ring 25 defines a number of pairs of through holes 29, oblique with respect to axis B and converging when moving away from axis B (Figure 7).

The holes 29 are designed to allow the supply of lubricant inside the bearing 21.

The cage 28 rests against the shoulders 30, with respect to which there is a minimal radial clearance, projecting from the shoulders 30 at the sides of surface 32 and is radially spaced apart from surface 32.

Each rolling body 27 is delimited by:
- a surface 40 designed to roll on surface 31 of the ring 25 and on surface 32; and
- a pair of surfaces 42, which lie on respective planes radial to axis B and cooperate with respective end edges 43 of the cage 28.

Surface 40 is curved and, when proceeding from one surface 42 to the other surface 42 parallel to axis B, initially moves away and then draws near.

The rolling bodies 27 have respective axes C parallel to axis B and arranged circumferentially around axis B.

Surface 32 of the gear teeth 20 and surface 40 of the rolling body 27 have respective curvatures that are different from each other (not visible in Figure 7).

Similarly, surface 31 of the ring 25 and surface 40 of the rolling body 27 have respective curvatures that are different from each other (not visible in Figure 7).

The bearing 21 has:
- a first radial clearance defined between surface 40 of the rolling body 27 and surface 32, in a radial direction to axis B;
- a second radial clearance defined between surface 40 of the rolling body 27 and ring 25, in a radial direction to axis B;
- a first axial clearance, which is defined between surfaces 40 of the rolling body 27 and the edges 43 of the cage 28, in a direction parallel to axis B; and
- a second axial clearance, which is defined between surfaces 42 of the rolling body 27 and the shoulders 30 of the ring 25, in a direction parallel to axis B.

In particular, the rolling bodies 27 are made of silicon nitride.

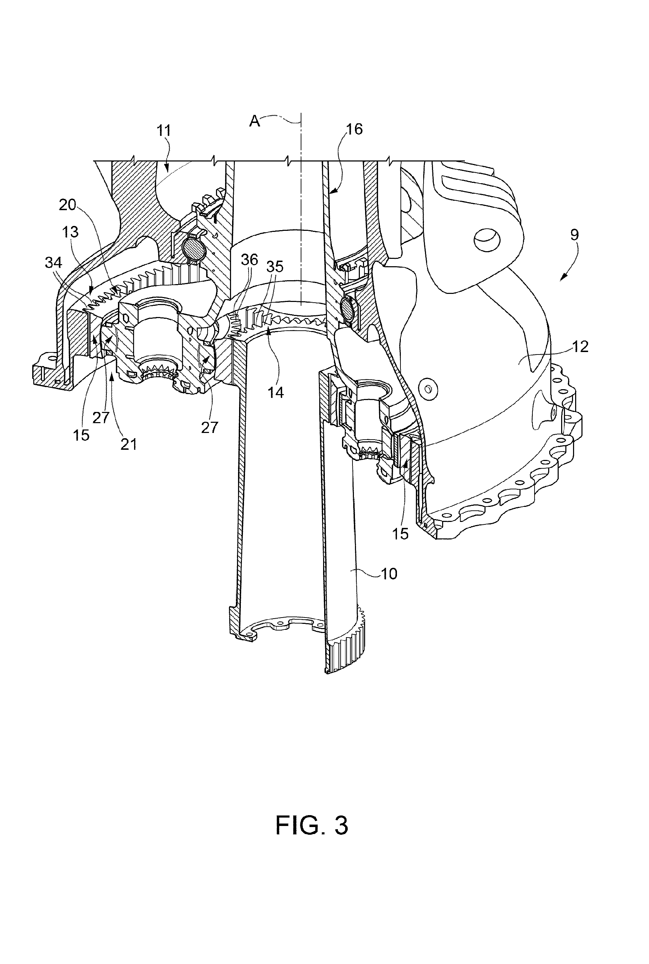

Preferably, the planet gear 15 and the crown wheel 13 have at least two respective teeth 36 and 34 (Figure 3) simultaneously meshing with each other and/or the planet gear 15 and the sun gear 14 have at least two respective teeth 36 and 35 simultaneously meshing with each other.

In particular, the number of teeth 36 and 34 and/or 36 and 35 simultaneously meshing is greater than 2, more precisely greater than 2.2.

In other words, the contact ratio of the gears formed by the planet gears 15 and the sun gear 14 and/or by the planet gear 15 and the crown wheel 13 is greater than 2, in particular greater than 2.2, and even more precisely greater than 2.6

The contact ratio is defined as the ratio between arc of action and circular pitch, where the arc of action is the arc traversed by the profile of tooth 36 in passing from the initial point of contact to that of disengagement with the corresponding tooth 34 or 35 calculated on the pitch circle of the planet gear 15.

In the case shown, the teeth 34, 35 and 36 are straight.

In particular, the planet gears 15 are made of Pyrowear EX53 type steel.

In use, the turbines 2 drive the drive shaft 5 of the main rotor 3 into rotation through the transmission unit 8.

In particular, the transmission unit 8 is a speed reducer and torque multiplier.

The final reduction stage 9 receives driving force from the input shaft 10 connected to the upstream reduction stages and transmits the driving force directly to the drive shaft 5 of the main rotor 3.

In greater detail, the input shaft 10 rotates about axis A and causes rotation of the sun gear 14 about axis A.

The rotation of the sun gear 14 about axis A causes rotation of the planet gears 15 about their axes B and the revolution of axes B around axis A.

The crown wheel 13 meshes with the planet gears 15 and remains fixed with respect to axis A, as it is carried by the casing 12.

The rotation of the spider 16 about axis A causes rotation of the drive shaft 5 about axis A.

The high torque to which the drive shaft 5 is subjected causes flexure with respect to axis A.

The bearings 21 allow oscillation of the drive shaft 5 with respect to the planet gears 15 about axis A and relative rotation between spider 16 and planet gears 15.

More specifically, the bearings 21 allow relative oscillation between the related planet gears 15 and pins 23.

From examination of the transmission unit 8 made according to the present invention, the advantages that it affords are evident.

In particular, the rolling bodies 27 are barrel rollers made of a ceramic material.

In this way, the rolling bodies 27 are particularly light with respect to known solutions.

In fact, the applicant has observed that, due to the fact that the rolling bodies 27 are particularly numerous, it is possible to achieve a weight saving of approximately 33% regarding the planet gears 15 with respect to known configurations and a weight saving of approximately 10% regarding the entire final reduction stage 9, with an evident gain in payload for the helicopter 1.

As the rolling bodies 27 are made of a ceramic material, they also have a particularly low coefficient of thermal expansion compared to known solutions.

In this way, a smaller reduction in radial and axial clearance is ensured in the event of high operating temperatures for the planet gears 15, enormously reducing the risk of the planet gears 15, and consequently the entire transmission unit 8, from seizing up.

Since the ceramic-steel coefficient of friction between the rolling bodies 27 and surfaces 31 and 32 is lower than the steel-steel coefficient of friction of known solutions, power absorption and heat generation due to the rolling bodies 27 rolling on surfaces 31 and 32 are reduced.

The applicant has observed that, due to the above-mentioned reasons, the planet gears 15, and consequently the entire transmission unit 8, have a longer operating life than planet gears using bearings of known types and described in the introductory part of the present description.

In use, a further weight saving and a further saving on power dissipated through heat are due to the fact that the bearing 21 comprises a single row of rolling bodies 27, unlike know solutions with two rows of rolling bodies arranged in an 'X' configuration.

Furthermore, since it comprises a single row of rolling bodies 27, the bearing 21 is capable of operating correctly even in the presence of larger misalignments of the ring 25 due, for example, to flexure of the drive shaft 5, with respect to solutions of known type and described in the introductory part of the present description.

Since at least two straight teeth 36 of each planet gear 15 are simultaneously meshed with at least two straight teeth 34 of the sun gear 14 and/or two straight teeth 35 of the crown wheel 13, it is possible to:
- reduce the face width of the above-mentioned teeth 34, 35 and 36, thereby achieving a further reduction in weight; and
- obtain greater resistance for the above-mentioned teeth 34, 35 and 36 under high-temperature conditions.

Finally, it is it is clear that modifications and variations may be made to the transmission unit 8 described and illustrated herein, without departing from the scope defined by the claims.

In particular, the transmission unit 8 could be applied to a convertiplane instead of a helicopter 1.

## Claims

1. A transmission unit (8) for a rotor (4) of an aircraft (1) capable of hovering, comprising:
- a sun gear (14) rotating about a first axis (A) and connectable to a drive input member (10);
- a fixed crown wheel (13); and
- at least three planet gears (15), which can rotate about respective second axes (B) and can each mesh with said sun gear (14) and said crown wheel (13); said second axes (B) being, in turn, rotatable about said first axis (A); and
- a spider (16) operatively connected to said planet gears (15), rotating about said first axis (A) and connectable to said drive shaft (5);
said transmission unit (8) comprising at least three bearings (21), each interposed between a respective said planet gear (15) and said spider (16);
**characterized in that** at least one said bearing (21) comprises a number of rolling bodies (27) shaped like barrel rollers and made of a ceramic material.

2. A transmission unit according to claim 1, **characterized in that** said at least one bearing (21) comprises a single row of said rolling bodies (27), which extends around said first axis (A).

3. A transmission unit, according to claim 1 or 2, **characterized in that** said rolling bodies (27), in use, roll about respective third axes (C) parallel to said second axis (B).

4. A transmission unit according to any of the preceding claims, **characterized in that** said bearing (21) comprises:
- a first race (32); and
- a second race (31) arranged radially within said first race (32);
said rolling body (27) being radially interposed between said first race (32) and said second race (31).

5. A transmission unit according to claim 4, **characterized in that** said first race (32) is integrally defined by a respective said planet gear (15) and said second race (31) is defined by a ring (25) fitted on said spider (16).

6. A transmission unit according to claim 5, **characterized in that** said ring (25) comprises at least one pair of holes (29) oblique with respect to said first axis (A) and designed to enable the supply of a lubricating fluid inside said bearing (21).

7. A transmission unit according to any of the preceding claims, **characterized in that** said sun gear (14), crown wheel (13) and planet gears (15) comprise respective first straight teeth (35), second straight teeth (34) and third straight teeth (36);
at least one said planet gear (15) comprising more than two of said third teeth (36) simultaneously meshing with respective said first teeth (35) of said sun gear (14); and/or
at least one said planet gear (15) comprising more than two of said third teeth (36) simultaneously meshing with respective said second teeth (34) of said crown wheel (13).

8. A transmission unit according to any of claims 4 to 7, **characterized in that** said rolling body (27) comprises a surface (40) that, in use, rolls on said first race (32);
said surface (40) and said first race (32) being curved and having curvatures that are different from each other.

9. A transmission unit according to claim 8, **characterized by** said surface (40) and said second race (31) being curved and having curvatures that are different from each other.

10. A transmission unit according to any of claims 4 to 9, **characterized in that** said bearing (21) comprises at least a first clearance, which extends radially with respect to said second axis (B) and is defined between said rolling body (27) and one of said first race (32) and second race (31).

11. A transmission unit according to any of claims 4 to 10, **characterized in that** said second race (31) comprises a pair of shoulders (30);
said rolling body (27) being interposed between said shoulders (30) and being separated from said shoulders (30) by a second clearance in an axial direction.

12. A transmission unit according to any of claims 4 to 11, **characterized in that** said bearing (21) comprises a containment cage (28) for said rolling bodies (27), which is radially interposed between said first race (32) and second race (31);
said rolling body (27) being separated from said cage (28) by a third clearance, which extends in a direction parallel to said second axis (B).

13. A transmission unit according to any of the preceding claims, **characterized in that** said ceramic material comprises silicon nitride.

14. An aircraft capable of hovering, comprising:
- a power unit (2) operatively connected to said input shaft (5);
- a rotor (3) driven by said drive shaft (5); and
- a transmission unit (8) according to any of the preceding claims and defining a final reduction stage (9), which is connected directly to said drive shaft (5) ;
said spider (16) and said drive shaft (5) being connected together so as to be rotatable about said first axis (A) with the same angular velocity.
